**Europäisches Patentamt**

**European Patent Office**

**Office européen des brevets**

(19)

(11) Veröffentlichungsnummer: **0 074 470**

**A1**

(12)

# EUROPÄISCHE PATENTANMELDUNG

(21) Anmeldenummer: **82105861.7**

(22) Anmeldetag: **01.07.82**

(51) Int. Cl.³: **G 06 K 19/00**
**G 06 K 17/00, G 06 K 13/02**

(30) Priorität: 16.09.81 DE 3136717
25.06.82 DE 3223749

(43) Veröffentlichungstag der Anmeldung:
23.03.83 Patentblatt 83/12

(84) Benannte Vertragsstaaten:
AT BE CH DE FR GB IT LI LU NL SE

(71) Anmelder: Brüne, Bernhard
Schölerpad 221
D-4300 Essen 11(DE)

(72) Erfinder: Brüne, Bernhard
Schölerpad 221
D-4300 Essen 11(DE)

(74) Vertreter: Schulte, Jörg, Dipl.-Ing.
Hauptstrasse 73
D-4300 Essen-Kettwig(DE)

(54) Verfahren und Vorrichtung zur automatischen Datenerfassung.

(57) Zur Kontrolle des Warenumschlages, der Waren- und Materialbewegungen und Warenwerte werden diese beim Eingang mit Kennzeichnungen versehen, auf die zuvor die notwendigen Daten beispielsweise mit Hilfe des zu einer Datenverarbeitungsanlage gehörenden Schreibers (Drucker) aufgebracht sind. Die Kennzeichnungen bzw. Kontrollkarten werden beim Ausgang oder Verkauf oder bei anderen Anlässen, wie beispielsweise der Inventur maschinell gelesen und ausgewertet. Dazu werden vorzugsweise Kennzeichnungen mit abtrennbaren Kontrollkarten verwendet, die bei jeder Zwischenstation abgetrennt, separiert und dann gelesen werden. Hierzu ist eine Vorrichtung vorgesehen, in der die Kontrollkarten gesammelt werden, um dann vereinzelt unter einer Leseeinheit hindurchgeführt und gelesen zu werden. Zur Sicherung der einzelnen Kontrollkarten und zur Erleichterung der Archivierung sind in den Sammelschacht und am Ende des Gehäuses der Vorrichtung Kassetten zur Aufnahme bzw. zum Auffangen (Stapeln) der einzelnen Kontrollkarten vorgesehen. Fehllesungen werden durch Zuordnung von Signalgebern zum Lesekopf und einen aus Trennteil und Auslöser bestehenden Stopper vermieden. Dieser Stopper schiebt ein Trennteil zwischen den Vereinzeler und letzte Karte, so daß diese nicht mehr ausgetragen werden kann.

Fig. 4

EP 0 074 470 A1

# Dipl. Ing. Jörg Schulte
### Patentanwalt
Zugelassener Vertreter beim Europäischen
Patentamt

Patentanwalt Dipl. Ing. Schulte
Hauptstr 73 - 4300 Essen 18

**0074470**

Telefon (0 20 54) 89 66 + 89 67
Hauptstraße 73
4300 Essen-Kettwig

Konten: Stadtsparkasse Essen
7 020 571 (BLZ 360 501 05)
Postscheck: Essen 210 734-433
(BLZ 360 100 43)

Datum

Ref : E 1637
in der Antwort bitte angeben.

Bernhard Brüne

Schölerpad    221

43oo Essen 11

### Verfahren und Vorrichtung zur automatischen Datenerfassung

Die Erfindung betrifft ein Verfahren zur Kontrolle des
Warenumschlages, der Warenbewegungen und Warenwerte innerhalb eines oder mehrerer Lager oder Verkaufsgeschäfte mit
oder ohne Zentrallager mit Hilfe von mit Daten versehenen
Warenkennzeichnungen. Die Erfindung betrifft außerdem
eine Vorrichtung zur Durchführung des Verfahrens und damit
zur Ermittlung und Verarbeitung entsprechender Daten.

Bei Kaufhausketten, insbesondere mit in verschiedenen
Städten gelegenen Kaufhäusern, ist man dazu übergegangen,
die einzelnen Waren mit einer internen Warenkennzeichnung
zu versehen, die die einzelne Ware vom Zentrallager bis
zum endgültigen Verkauf begleitet und die Daten enthält,
die für Inventurzwecke sowie für die Wiederbeschaffung
entsprechender Waren verwendet werden. Dabei werden diese
Warenkennzeichnungen bzw. Karten in der Regel als Lochkarten ausgebildet, die an den einzelnen Zwischenstationen
zur Speicherung und zum Vergleich der Daten einer entsprechenden Datenverarbeitungsanlage zugeführt werden. Die Lochkarten müssen mit erheblichem Arbeitsaufwand hergestellt und so an den Waren angebracht werden, daß sie nicht beschädigt werden, da nur so ein einwandfreies Greifen bzw. Ablesen der Daten möglich ist. Weiter ist es bekannt, Warenkennzeichnungen mit beispielsweise magnetisch abgreifbaren Daten zu versehen, die an den jeweiligen Verkaufsstädten über Lesestift abgegriffen und dann der Datenverarbeitungsanlage zugeführt werden.

Nachteilig bei dem bekannten Verfahren ist der erhebliche maschinelle Aufwand, der insbesondere für kleinere Geschäfte oder Verkaufsketten nicht tragbar ist. Für die Herstellung der Lochkarten müssen gesonderte Maschinen angeschafft und entsprechend geschultes Personal vorgehalten werden. Darüberhinaus gibt es bisher keine Möglichkeit, den Weg der Ware eindeutig zu verfolgen und dabei im nachhinein den Verbleib der Ware zu ermitteln. Dies ist aber insbesondere bei Geschäften und kleineren Verkaufsketten mit mehreren verteilt liegenden Verkaufsgeschäften von großer Wichtigkeit, da diese insbesondere daran interessiert sind, bei möglichst kleinem Warenbestand dennoch überall ein großes Warenangebot zur Verfügung zu haben. Ein derartiges großes Warenangebot wird dadurch erreicht, daß die einzelnen Waren bei Nachfrage zwischen den Geschäften ausgetauscht werden, was aber nur dann möglich ist, wenn der Verbleib der Waren kurzfristig nachvollziehbar ist. Bisher muß bei den einzelnen Geschäften rundum gefragt werden, was einen großen Zeit- und Arbeitsaufwand erfordert.

Der Erfindung liegt die Aufgabe zugrunde, ein automatisches Datenerfassungs- und Informationsverfahren zu schaffen. Insbesondere soll es sich für die Erfassung großer Datenmengen und deren Verarbeitung unabhängig von der Größe und Verzweigung des Betriebes eignen. Außerdem soll dafür eine geeignete sicher arbeitende und Lesefehler sofort erkennende Vorrichtung geschaffen werden.

Die Aufgabe wird gemäß der Erfindung dadurch gelöst, daß den Waren oder Materialien Warenkennzeichnungen mit kleinen Abmessungen zugeordnet werden, auf die zuvor die notwendigen Daten aufgebracht worden sind und die beim Warenausgang und gegebenenfalls bei anderen Anlässen oder bei Zwischenstationen gelesen und datenmäßig ausgewertet werden.

Das erfindungsgemäße Verfahren bietet die Möglichkeit, ohne Schwierigkeiten und ohne großen Aufwand jederzeit sofort den Verbleib der einzelnen Waren festzustellen bzw. vorzuhalten. Damit ist eine bessere Überwachungsmöglichkeit gegeben und alle für den Warenumschlag, die Warenbewegungen und die Warenwerte wichtigen Daten können gespeichert und jederzeit zur Verfügung gestellt werden. Dieses umfassende Informationsverfahren kann ebenso für die Inventur wie für Wiederbeschaffungsaufgaben eingesetzt werden, ohne daß dafür zusätzliche Maßnahmen erforderlich sind. Der erforderliche Investitionsaufwand ist verhältnismäßig gering, da insbesondere der Aufwand der Herstellung von Lochkarten entfällt und auf einfachere Datenherstellungsverfahren zurückgegriffen werden kann. Vorteilhaft werden die Karten bzw. Warenkennzeichnungen mit Hilfe des einer Datenverarbeitungsanlage zugeordneten Druckers mit den notwendigen Daten versehen. Für das Bedrucken der Karten fällt somit ein zusätzlicher Investitionsaufwand nicht an, zumal auf eine in der Regel vorhandene Datenverarbeitungsanlage mit Drucker zurückgegriffen wird.

Bei Warenhaus- oder Geschäftsketten mit einem Zentrallager oder einer Vielzahl von Verkaufsgeschäften ist es zweckmäßig, den Warenkennzeichnungen eine der Zahl der Zwischen-

- 4 -

stationen entsprechende Zahl von abtrennbaren Kontrollkarten anzufügen, auf die gleichzeitig mit der Hauptwarenkennzeichnung entsprechende Daten aufgebracht werden und die nacheinander beim Verlassen des Zentrallagers, des Zwischenlagers und Verkaufs abgenommen, gesammelt, separiert und deren Daten dann gelesen, gespeichert und schließlich verarbeitet bzw. miteinander verglichen werden. Die als Warenkennzeichnungen dienenden Etiketten oder Karten beinhalten sowohl die für den Käufer der Ware interessanten Daten als auch die für den Geschäftsinhaber bzw. die einzelnen Verkaufsgeschäfte notwendigen Informationen und Daten.

Das erfindungsgemäße Verfahren wird zweckmäßig mit Hilfe einer Vorrichtung durchgeführt, die ein aus einer Separiereinheit und einer Leseeinheit kombiniertes Gerät aufweist und mit einem üblichen Datenverarbeitungsteil koppelbar ist, wobei der Separiereinheit ein Sammelschacht für die Warenkennzeichnungen und beiden eine Transporteinrichtung zugeordnet ist.

Eine derartige Vorrichtung zeichnet sich zunächst durch geringe Baumaße aus und ist von daher insbesondere für entsprechende Verkaufsketten oder auch für einzelne Geschäfte geeignet. Darüberhinaus ermöglicht die Vorrichtung eine Verbindung mit einem zentralen Rechner, dem von der jeweiligen Vorrichtung die notwendigen und ermittelten Daten zugeführt werden. Die Warenkennzeichnung oder die davon abgetrennten Karten werden gesammelt und so vorbereitet, daß sie anschließend von der Leseeinheit sicher und genau gelesen werden können. Die besondere Ausbildung der gemeinsamen Transporteinrichtung ermöglicht es, beide Einheiten innerhalb eines Gehäuses dicht nebeneinander anzuordnen und eine sichere Erfassung der auch auf kleinsten Etiketten fixierten Daten zu gewährleisten.

Um ein sicheres Lesen zu ermöglichen, müssen die Warenkennzeichnungen bzw. die Kontrollkarten einzeln der Leseeinheit
zugeführt werden. Dies ist dadurch erreicht, daß erfindungsgemäß am schlitzförmig ausgebildeten Auslauf des Sammelschachtes ein Vereinzeler das untere Ende des Sammelschachtes
teilweise verschließend angeordnet ist. Die einzelne Kontrollkarte wird bei dieser Ausbildung verursacht durch den Vereinzeler in den Auslauf hineingeführt und dann der Transporteinrichtung übergeben. Die Transporteinrichtung ist dabei mit
ihrer Umkehre unmittelbar am Auslauf positioniert. Sie besteht
aus mehreren, die Mitte und/oder die Seiten der Kontrollkarten
freilassenden Transportbändern, Riemen oder Transportrollen.
Zweckmäßig fassen und führen die Transportbänder die Ränder
der einzelnen Karten dabei gleichzeitig von oben und von unten.

Die Leseeinheit besteht erfindungsgemäß aus einem oder mehreren
optoelektronischen oder magnetischen Leseköpfen, einem elektronischen Decorder und einem Interface und gegebenenfalls
einem Datenrecorder oder ähnlichem Datenspeicher. Die Leseeinheit wird über das Interface entweder mit einem Datenverarbeitungsteil verbunden, zwecks zentraler Datenerfassung
und Datenverarbeitung oder aber mit einem Datenrecorder zwecks
dezentraler Datenerfassung und zentraler Datenverarbeitung
durch ein separates Datenverarbeitungsteil. Hierfür werden die
auf Datenträgern, z.B. Tonbandcassetten mit dem Datenrecorder
gespeicherten Daten dem Datenverarbeitungsteil zugeführt. Mit
einer derartigen Einheit können Kontrollabschnitte mit den verschiedensten Informationen gelesen werden. Dazu gehören insbesondere Kontrollabschnitte mit Bar-codes, Magnetstreifen,
OCR-Schriften oder Strichmarkierungen. Auch wenn die Schnittstellenstruktur der Leseeinheit mit der des Rechners bzw. des
Datenverarbeitungsteils nicht übereinstimmen, ist eine einwandfreie Daten- bzw. Signalanpassung über das Interface gegeben.
Beschädigte Warenkennzeichnungen bzw. Karten können zu Kontrollzwecken ohne weiteres nachgelesen werden, da an den Decorder auch
ein elektronischer Lesestift anschließbar ist. Dies ist beispielsweise über einen Stecker möglich, so daß der Lesestift
nicht immer mit dem Decoder in Verbindung steht. Auf diese
Weise können die Daten der Leseeinheit und dann dem Datenverarbeitungsteil bzw. Rechner sicher zugeleitet werden, ohne daß generell für die Anbringung der Warenkennzeichnungen an den Waren besondere Vorsichtsmaßnahmen beachtet werden müssen. Aufgrund der kleinen Bauweise der erfindungsgemäßen Vorrichtung kann diese auch als tragbare Einheit ausgebildet werden bzw. zusätzlich durch eine tragbare Einheit ergänzt werden, wobei letztere aus Lesestift, Decoder und Zwischenspeicher besteht und an das Interface bzw. den Decoder ankoppelbar ist.

Zur Verbesserung der Handhabungssicherheit und der Anpaßbarkeit ist nach einer Ausbildung der Erfindung vorgesehen, daß eine die Warenkennzeichnungen bzw. Karten aufnehmende und in den Sammelschacht einführbare Kassette vorgesehen ist, deren Boden eine Ausnehmung für den Vereinzeler und einen auf die jeweils eingesetzten Warenkennzeichnungen einstellbaren Austragsschlitz für den Ausstoß der Warenkennzeichnungen bzw. Karten aufweist. Durch dem jeweiligen Sammelschacht angepaßte Kassetten ist das Sammeln der Kontrollabschnitte bzw. Karten und darüberhinaus das Einführen dieser Karten in den Sammelschacht wesentlich erleichtert. In vorteilhafter Weise können die Kassetten gleichzeitig an den einzelnen Kassen oder sonstigen Zwischenstationen aufgestellt und zum Einsammeln der Karten verwendet werden. Damit ist gleichzeitig sichergestellt, daß sowohl beim Sammeln wie auch beim Transport keine derartigen Karten verlorengehen oder beschädigt werden. So wird die Handhabungssicherheit verbessert und gleichzeitig durch die Wahl des Austragsschlitzes eine Anpassung an unterschiedliche Warenkennzeichnungen bzw. Karten möglich. Die Ausnehmung reicht vorzugsweise bis etwa zur Kassettenmitte, so daß sichergestellt ist, daß die einzelnen Karten sicher von dem messerförmigen Vereinzeler erfaßt und durch den Austragsschlitz und den Auslauf ausgetragen werden. Durch die längere Ausbildung der Ausnehmung in der Kassette und durch die Gestaltung des Bodens kann der Kartenpacken in eine vorteilhafte Schräglage gebracht werden, was das Erfassen der einzelnen Karten durch das Messer des Vereinzelers erleichtert.
Zur Erleichterung der Einführung der Kassetten in den Sammelschacht und um sicherzustellen, daß die richtigen Kassetten eingeführt werden, sind zweckmäßig an der Innenseite des Sammelschachtes und an der Außenwand der Kassette aufeinander angepaßte Führungen vorgesehen.

Ebenfalls zur Erhöhung der Handhabungssicherheit und gleichzeitig auch zur Ermöglichung einer einfachen KOntrolle ist nach einer weiteren Ausbildung der Erfindung vorgesehen, daß Separiereinheit und Leseeinheit einem Gehäuse zugeordnet sind, das endseitig an der Umkehrrolle der Transporteinrichtung Halterungen für eine Auffangkassette aufweist, deren Abmessungen und Form etwa der dem Sammelschacht zuzuordnenden Kassette entspricht. In einer derartigen Kassette werden die gelesenen Warenkennzeichnungen bzw. Karten unmittelbar nach dem Lesevorgang aufgefangen und gespeichert bzw. gestapelt. Sie önnen dann ohne weiteres unmittelbar wieder in den Sammelschacht eingeführt werden, um den Lesevorgang zu Kontrollzwecken zu wiederholen. Gleichzeitig können derartige Kassetten aber in vorteilhafter Weise auch zur Archivierung der Karten verwendet werden, wobei durch Anbringung entsprechender Hinweise auf der Kassette eine weitere Vereinfachung der Archivierung zu erreichen ist. Diese Kassetten können aus Kartonmaterial gefaltet und verklebt oder Kunststoff-Spritzguß oder ähnlichem gefertigt sein, so daß die Herstellkosten verhältnismäßig gering sind.

Lesefehler können schnell erkannt und eliminiert werden, indem nach einer Ausbildung der Erfindung in Transportrichtung der Karten vor und hinter dem Lesekopf die Karten überwachende Signalgeber angeordnet und über eine Aufbereitungseinheit für Lesefehler einen den Kartenausstoß aus der Separiereinheit blockierenden Stopper schaltend ausgebildet sind. Mit Hilfe einer derartigen Anordnung von Bauelementen zur Erfassung und Interpretation von Lesefehlern kann der Kartenausstoß sofort, d.h. sofort mit der fehler-

- 8 -

haften Karte gestoppt und somit die fehlerhafte Karte eliminiert bzw. der Lesefehler korrigiert werden. Das Nachlaufen des Motors bzw. des Vereinzelers ist dann unschädlich, da der Kartenausstoß als solcher verhindert ist.Außerdem können mit einer derartigen Anordnung auch gleichzeitig weitere Überwachungsfunktionen bezüglich des Lesevorganges der einzelnen Karten vorgenommen werden, da die vor und hinter dem Lesekopf angeordneten Signalgeber bezüglich der Einleitung und des Abschlusses des Lesevorganges mit eingesetzt werden können. Die Signalgeber und der Lesekopf sind signalmäßig an die Aufbereitungseinheit ankoppelbar, wobei als Signalgeber beispielsweise Lichtschranken verwendet werden und der Aufbereitungseinheit ein akustischer Signalgeber nachgeschaltet ist, um die Bedienungspersonen auf eventuell auftretende Lesefehler auch akustisch aufmerksam machen zu können.

Um zu verhindern, daß weitere Karten nach einem Stopsignal durch den ausgeschalteten aber noch nachlaufenden Vereinzeler separiert werden,ist erfindungsgemäß vorgesehen, daß der Stopper einen Auslöser sowie ein zwischen Mitnehmer und Kartenstapel einführbares Trennteil aufweist. Damit wirkt der Stopper nicht unmittelbar auf den Vereinzeler, d.h. stoppt diesen ab, sondern trennt vielmehr den Kartenstapel vom Mitnehmermesser bzw. verhindert, daß das Mitnehmermesser auf den Kartenstapel einwirken kann. Das Mitnehmermesser bzw. der Vereinzeler kann somit unbeschadet nachlaufen, was seine Ausgestaltung bzw. Ausrüstung vereinfacht. Der Auslöser ist zweckmäßig als Magnet ausgebildet, während das Trennteil als elastische Blechlippe ausgebildet ist, die auf oder im Boden des Sammelschachtes geführt verschieblich angeordnet ist, oder als den Kartenstapel beeinflussende Hubvorrichtung. Bei der Verwendung einer Hubvorrichtung wird der Kartenstapel geringfügig angehoben, so daß das Mitnehmermesser ebenfalls die jeweils unterste Karte nicht mehr ergreifen bzw. beeinflussen kann.

Die Erfindung zeichnet sich insbesondere dadurch aus, daß mit einer kleinbauenden und einen geringen Investitionsaufwand erfordernden Vorrichtung eine Möglichkeit geschaffen ist, Kontrollkarten bzw. Warenkennzeichnungen mit kleinen bzw. kleinsten Abmessungen zu vereinzeln und maschinell zu lesen, wobei diese vorher in zweckmäßiger Weise mit geringem Aufwand wirtschaftlich hergestellt bzw. bedruckt worden sind. Diese kleine Abmessungen aufweisenden Kontrollabschnitte bzw. Karten können auch bei kleinen Stückzahlen ohne weiteres wirtschaftlich hergestellt und gelesen werden, wobei sie in vorteilhafter Weise am Einsatzort selbst mit den notwendigen Daten zu versehen sind. Außerdem bietet die Erfindung die Möglichkeit, den Lagerort einer bestimmten gesuchten Ware genau und schnell zu ermitteln, so daß diese dann dem jeweiligen Bedarf entsprechend zu einem anderen Zwischenlager oder zu einer Verkaufsstätte gebracht werden kann. Mit den besonderen in den Sammelschacht oder an den Auslauf anzuordnenden Kassetten wird überraschend ein Mehrfacheffekt insofern erreicht, als diese Kassetten sowohl das Sammeln der Kontrollabschnitte bzw. Karten, das Einführen bzw. Einlegen in den Sammelschacht und deren spätere Kontrolle bzw. Archivierung ermöglicht bzw. wesentlich erleichtert. Weiter können Lesefehler schnell erkannt und kurzfristig eliminiert werden, indem die fehlerhaften oder falsch gelesenen Karten sofort ermittelt und festgehalten werden. Dann ist eine Nachkontrolle mit Hilfe eines Lesestiftes einfach und ohne großen Aufwand möglich.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:

Fig. 1    eine Schemaskizze einer Verkaufskette,

Fig. 2    eine schematisierte Darstellung eines aus
          Separiereinheit und Leseeinheit bestehenden
          Gerätes,

Fig. 3    eine Warenkennzeichnung mit mehreren Karten,

Fig. 4    eine schematisierte Gesamtdarstellung mit
          Vereinzeler und Leseeinheit,

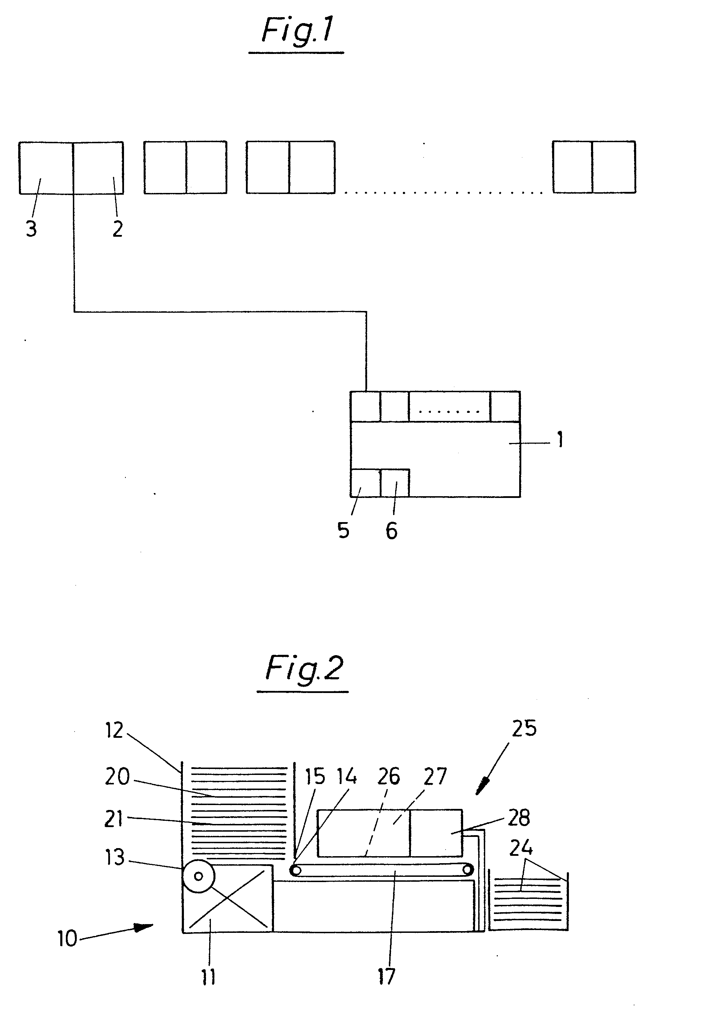

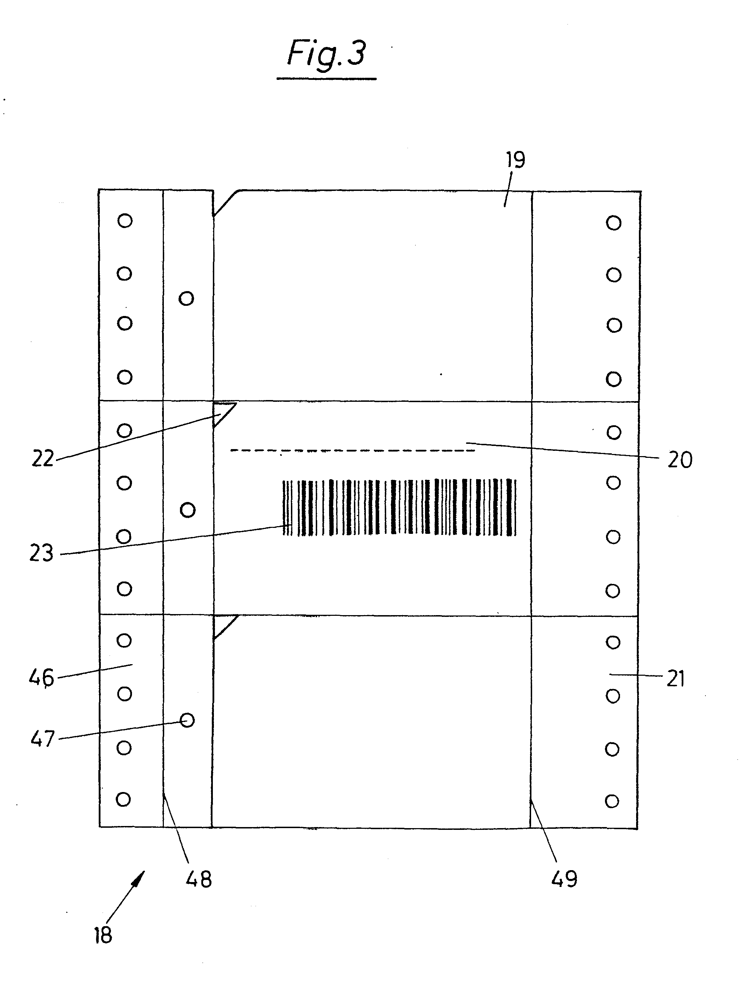

Fig. 1 zeigt eine aus dem Zentrallager 1, mehreren Zwischenlagern 2 und Verkauf 3 bestehende Verkaufskette. Die Zwischenlager 2 können voneinander geographisch getrennt, z.B.
in einer Stadt oder auch in mehreren Städten gelegen sein.
Die Zwischenlager 2 werden vom Zentrallager 1 aus mit den
notwendigen Waren versorgt. Die im Zentrallager 1 eingehenden
Waren erhalten die gegebenenfalls mit einem der Datenverarbeitungsteil   6 zugeordneten Drucker 5 bedruckten Warenkennzeichnungen 18 gemäß Fig. 3. Die Waren werden dann nach
entsprechender Sortierung den einzelnen Zwischenlagern 2
oder Verkaufsstellen zugeführt und von dort aus verkauft.
Vorzugsweise im Zentrallager 1 ist ein Gerät gemäß Fig. 2,
zwecks zentraler Datenerfassung und Datenverarbeitung
positioniert. Es ist auch möglich, sowohl im Zentrallager 1
wie auch in den Zwischenlagern 2 und gegebenenfalls im
Verkauf 3 Geräte gemäß Fig. 2 zwecks dezentraler Datenerfassung zu positionieren, die dazu dienen, die auf den
Warenkennzeichnungen 18 enthaltenen Daten abzulesen und zu
speichern und dann die gespeicherten Daten an das Datenverarbeitungsteil 6 zwecks zentraler Datenverarbeitung weiterzuleiten.
Die aus Etikett,
19 und Kontrollkarten 2o, 21 bzw. Karten bestehende Warenkennzeichnung 18 ist jeweils den einzelnen Waren so angeheftet, daß sie nicht verlorengehen kann. Bei Verlassen des
Zentrallagers 1 bzw. des Zwischenlagers 2 bzw. des Verkaufs
3 wird der Warenkennzeichnung 18 eine Kontrollkarte 2o, 21
bzw. eine Karte entnommen und dem hier angeordneten Gerät
1o zugeführt. Die Kontrollkarten 2o, 21 werden dabei zu-

nächst in der Separiereinheit 11 einem Sammelschacht 12 zugeführt, sowie über den Vereinzeler 13 so aufgeteilt werden, daß sie einzeln von der nachfolgenden Leseeinheit 25 richtig identifiziert werden können. Der Vereinzeler 13 ist, wie aus Fig. 2 zu ersehen ist, so angeordnet, daß die einzelnen Kontrollkarten 2o, 21 jeweils auf den Auslauf 14 am unteren Ende 15 des Sammelschachtes 12 zugeführt und dann über den Vereinzeler 13 aus diesem herausgeschoben werden. Die einzelnen Kontrollkarten 2o, 21 mit ihrer Eckkennzeichnung 22 als Sortierhilfe werden dann von der Transporteinrichtung 17 erfaßt und unter der Leseeinheit 25 hindurchgeführt.

Fig. 3 zeigt, wie bereits erwähnt, eine Warenkennzeichnung 18, die aus einem Etikett 19 und mehreren Kontrollkarten 2o, 21 besteht. Jede der Kontrollkarten und ggf. auch das Etikett 19 weisen einen Bar-code 23 oder einen ähnlichen Informationsstreifen auf, der alle die Daten enthält, die anschließend von der Leseeinheit ermittelt und weitergeleitet werden sollen. Die Kontrollkarten werden hinter der Transporteinrichtung 17 in einer Auffangkassette 24 aufgefangen. Zum Durchführen durch den Drucker weisen die Karten vorzugsweise Führungslochränder 46 auf. Diese können abgetrennt werden, wozu Perforationen 48, 49 vorgesehen sind. Die Befestigungslöcher 47 dienen zur Befestigung der Karten an den Waren bzw. Stückgütern.

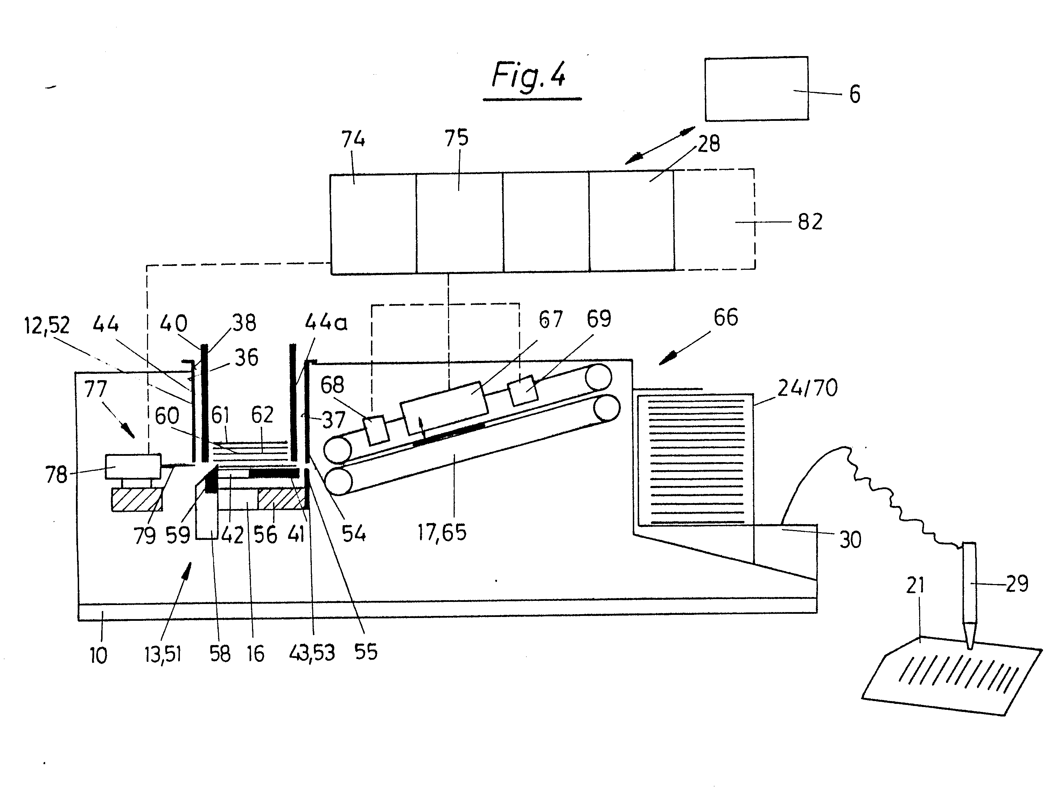

Die Leseeinheit 25 besteht aus einem oder mehreren Leseköpfen 26, die mit einem Decoder 27 und dem Interface 28 in Verbindung stehen und die einzelnen ermittelten Daten über diese weiter an den Rechner bzw. das Datenverarbeitungsteil 6 geben. Die Daten können auch einem mit dem Interface verbundenen Datenrecoder zur Zwischenspeicherung auf einen Datenträger (Datenkassette) übermittelt werden, wenn das Lesegerät nicht direkt mit dem Datenverarbeitungsteil 6 verbunden ist. Eine dezentrale Datenerfassung und zentrale Datenverarbeitung wird so möglich, indem die Daten über den Datenträger dem Datenverarbeitungsteil 6 zugeführt werden. Die einzelnen Teile der Leseeinheit 25 sind dabei so angeordnet, daß sie wenig platzaufwendig sind, wobei aufgrund der geringen Baumaße ein optimale Abmessungen aufweisendes Gerät 1o geschaffen ist. Die einzelne Kontrollkarte 2o, 21 wird in einem bestimmten Abstand unter dem Lesekopf 26 hindurchgeführt und dabei gelesen. Die richtige Geschwindigkeit sowie die richtige Lage und der richtige Abstand ist dadurch gewährleistet, daß die Transporteinrichtung 17 beispielsweise aus mehreren Bändern besteht, die die einzelne Kontrollkarte 2o, 21 an den Rändern von oben und unten erfaßt und gleichförmig transportiert. Schadhafte Kontrollkarten 2o, 21 werden beispielsweise über den Lesestift 29 gelesen, der beispielsweise über einen in Fig. 4 gezeigten Stecker 3o mit dem Gehäuse 1o bzw. dem Interface 28 verbunden ist.

Das in Fig. 4 dargestellte Gehäuse 1o nimmt sowohl die Separiereinheit 11 wie auch die Leseeinheit 25 auf. Dabei kann die Leseeinheit aus einem stationären Leseteil oder aus dem Lesestift 29 bestehen.

Fig. 4 zeigt das Gehäuse 1o im Schnitt mit dem Sammelschacht 12, dem Vereinzeler 13 und den am unteren Ende 15 angeordneten Auslauf 14. Der Vereinzeler 13 greift durch die Ausnehmung 16 im Boden des Sammelschachtes 12 und schiebt jeweils eine einzelne Kontrollkarte 2o, 21 durch den Auslauf 14 auf die Transporteinrichtung 17, die sie nach Durchlauf der Leseeinheit 25 in die am Ende des Gehäuses 1o angeordnete Auffangkassette 24 austrägt.

In den Sammelschacht 12 ist eine beispielsweise an der Rückwand 36 und der Vorderwand 37 geführte Kassette 4o eingeführt. Diese Kassette 4o weist in ihrem Boden 41 eine mit der Ausnehmung 16 im Sammelschacht 12 korrespondierende Ausnehmung 42 auf, die allerdings auch länger, vorzugsweise bis zur Kassettenmitte geführt ist. Auf der gegenüberliegenden Seite ist der Austragsschlitz 43 in der Kassette 4o vorgesehen, durch den die einzelnen Kontrollkarten 2o, 21 hindurchgeschoben werden. Auf den Innenseiten 38 oder 39 des Sammelschachtes 12 und/oder auf den Außenwänden 44 oder 44a der Kassette 4o können Führungen ausgebildet sein, zur Fixierung der Kassette 4o im Sammelschacht bzw. am Auslauf.

- 13 -

Die Separiereinheit mit dem Sammelschacht 12, 52 und dem von zwei Schlitzmessern 54, 55 einstellbaren Auslauf 14, 53 sowie dem in den Bereich des Bodens 56 eingreifenden Vereinzeler 13, 58 ist mit 11, 51 bezeichnet.

Der Vereinzeler 13, 58 trägt ein Mitnehmermesser 59, das jeweils die unterste Karte des Kartenstapels 60 ergreift und dann Karte für Karte 61, 62 durch den Auslauf 14, 53 auf die Transporteinrichtung 17, 65 hinausschiebt.

Vor und hinter dem Lesekopf 26, 67 sind Signalgeber 68, 69 angeordnet, über die zusammen mit dem Lesekopf Signale an die Aufbereitungseinheit 74 gegeben werden, die bei auftretenden Fehllesungen über die Steuerelektronik 75 zu einem Betätigen des Stoppers 77 führen. Hinter den Bändern bzw. Riemen der Transporteinrichtung 17, 65 ist eine Auffangkassette 24, 7o angeordnet, in der die gelesenen Karten 61, 62 aufgefangen und gestapelt werden. Bei auftretenden Fehllesungen liegt die falsche Karte bzw. die falsch gelesene Karte somit jeweils oben auf der Auffangkassette 24, 7o auf und kann ohne großen Separier- oder Recherchenaufwand beispielsweise mit Hilfe eines Lesestiftes 29 nachgelesen werden, so daß die Fehler korrigiert, auf jeden Fall aber als solche separiert und ermittelt werden.

Der Stopper 77 besteht aus einem Auslöser 78, hier einem Magneten und einem Trennteil, hier einer Blechlippe 79 oder einer den Kartenstapel 60 anhebenden Hubvorrichtung. Die Blechlippe 79 wird bei Ansprechen der Aufbereitungseinheit 74 über den Auslöser 78 so zwischen den Kartenstapel 6o, d.h. die unterste Karte und das Mitnehmermesser 59 geschoben, daß dieses die letzte Karte nicht mehr durch den Auslauf 53 ausschieben kann. Das Mitnehmermesser 59 reibt dann zwar an der elastischen Blechlippe 79 vorbei, was aber unerheblich ist, da die Blechlippe nachgeben, d.h. gebogen werden kann. Die Blechlippe 79 ist entweder im Boden 56 des Sammelschachtes 52 geführt oder liegt auf dem Boden auf. Im Bereich dazwischen kann durch eine Führung zu einer gleichmäßigen horizontalen Verschiebung der Blechlippe 79 beigetragen werden.

Mit Hilfe der vor bzw. hinter dem Lesekopf 26, 67 angeordneten Signalgeber 68, 69 kann der Lauf der einzelnen Karte 61, 62 durch die Leseeinheit 25, 66 genau überwacht und kontrolliert werden. Bei Erreichen der forderen Kante der einzelnen Karte 61, 62 wird durch den Signalgeber 68 ein Signal gesetzt und gleichzeitig der Lesekopf 67 initiiert, der bei Erreichen der forderen Kante der Karte mit dem Lesevorgang beginnt. Das Startsignal des Lesekopfes wird ebenso wie das Signal des Signalgebers der Aufbereitungseinheit zugeführt. Lesekopf und Signalgeber 69 sind in einer etwa der Länge der Karten entsprechenden Entfernung voneinander angeordnet. Erreicht die hintere Kante der Karte den Lesekopf, wird der Lesevorgang des Bar-codes beendet und ein entsprechendes Stopsignal der Aufbereitungseinheit übermittelt. Gleichzeitig wird über den Signalgeber 69 ein Signal gesetzt, daß die vordere Kante der Karte den Signalgeber 69 passiert hat. Nur wenn die Signale in der vorgegebenen Reihenfolge und Zeit bei der Aufbereitungseinheit 74 registriert werden, ist der Lesevorgang als solcher akzeptiert und der Stopper 77 wird nicht über die Aufbereitungseinheit bzw. die Steuerelektronik 75 angesprochen. Ist die Reihenfolge der Signale oder die Zeit nicht korrekt, so wird der Stopper 77 angesprochen und der Separier- und Lesevorgang unterbrochen. Über ein akustisches Signal wird die Bedienungsperson informiert, daß ein Fehler vorliegt. Anhand der Signale kann dann ermittelt werden, ob es sich um einen Vereinzelungsfehler, um eine Beschädigung der letzten Karte oder um einen anderen Fehler handelt.

Patentansprüche

1. Verfahren zur Kontrolle des Warenumschlages, der Warenbewegungen und Warenwerte innerhalb eines oder mehrerer Lager oder Verkaufsgeschäfte mit oder ohne Zentrallager mit Hilfe von mit Daten versehenen Warenkennzeichnungen, dadurch gekennzeichnet, daß den Waren oder Materialien Warenkennzeichnungen mit kleinen Abmessungen zugeordnet werden, auf die zuvor die notwendigen Daten aufgebracht worden sind und die beim Warenausgang und gegebenenfalls bei anderen Anlässen oder bei Zwischenstationen gelesen und datenmäßig ausgewertet werden.

2. Verfahren nach Anspruch 1, dadurch gekennzeichnet, daß den Warenkennzeichnungen eine der Anzahl der Zwischenstationen entsprechende Zahl von abtrennbaren Karten angefügt wird, auf die gleichzeitig mit der Hauptwarenkennzeichnung entsprechende Daten aufgebracht werden und die nacheinander beim Verlassen des Zentrallagers, Zwischenlagers und Verkaufs abgenommen, gesammelt, separiert und deren Daten dann gelesen, gespeichert und schließlich miteinander verglichen bzw. verarbeitet werden.

3. Vorrichtung zur Durchführung des Verfahrens nach Anspruch 1 und Anspruch 2 und zur Verarbeitung der ermittelten Daten, dadurch gekennzeichnet, daß aus einer Separiereinheit (11, 51) und einer Leseeinheit (25, 66) bestehende Geräte (1o) mit einem Datenverarbeitungsteil (6) koppelbar sind, wobei der Separiereinheit ein Sammelschacht (12, 52) für die Warenkennzeichnungen (18, 19, 2o, 21) bzw. Karten (61, 62) und beiden eine Transporteinrichtung (17, 65) zugeordnet ist.

4. Vorrichtung nach Anspruch 3, dadurch gekennzeichnet, daß am schlitzförmig ausgebildeten Auslauf (14 , 53) des Sammelschachtes (12, 52) ein Vereinzeler (13, 58) das untere
Ende (15) des Sammelschachtes teilweise verschließend
angeordnet ist.

5. Vorrichtung nach Anspruch 3, dadurch gekennzeichnet, daß
die Leseeinheit (25, 67) aus einem oder mehreren
optoelektronischen oder magnetischen Leseköpfen (26 , 67)
einem elektronischen Decoder (27) und einem Interface
(28) besteht.

6. Vorrichtung nach Anspruch 3, dadurch gekennzeichnet, daß
eine die Warenkennzeichnungen (2o, 21) bzw. Karten (61,
62) aufnehmende und in den Sammelschacht (12, 52) einführbare Kassette (4o) vorgesehen ist, deren Boden (41)
eine Ausnehmung (42) für den Vereinzeler (13, 58) und
einen auf die jeweils eingesetzten Warenkennzeichnungen
einstellbaren Austragsschlitz (43) für den Ausstoß der
Warenkennzeichnungen aufweist.

7. Vorrichtung nach Anspruch 3 und Anspruch 6, dadurch gekennzeichnet, daß Separiereinheit (11, 51) und Leseeinheit
(25, 66) einem Gehäuse (1o) zugeordnet sind, das endseitig an der Umkehrrolle der Transporteinrichtung (17, 65)
Halterungen für eine Auffangkassette (24) aufweist, deren
Abmessungen und Form  etwa der dem Sammelschacht (12, 52)
zuzuordnenden Kassette (4o) entspricht.

8. Vorrichtung nach Anspruch 3, dadurch gekennzeichnet, daß
in Transportrichtung der Karten (61, 62) vor und hinter
dem Lesekopf (26, 67) die Karten überwachende Signalgeber (68, 69) angeordnet und über eine Aufbereitungseinheit (74) für Lesefehler einen den Kartenausstoß aus
der Separiereinheit (11, 51) blockierenden Stopper (77)
schaltend ausgebildet sind.

9. Vorrichtung nach Anspruch 3 und Anspruch 8, <u>dadurch ge-kennzeichnet</u>, daß der Stopper (77) einen Auslöser (78) vorzugsweise einen Magnet sowie ein zwischen Mitnehmer-messer (59) und Kartenstapel (6o) einführbares Trenn-teil aufweist.

1o. Vorrichtung nach Anspruch 3 und Anspruch 9, <u>dadurch ge-kennzeichnet</u>, daß das Trennteil als elastische Blechlippe (79) ausgebildet ist, die auf oder im Boden (56) des Sammelschachtes (12, 52) geführt verschieblich angeordnet ist  oder als den Kartenstapel (6o) beeinflussende Hubvorrichtung.

0074470

## Fig.1

## Fig.2

## Fig.3

_Fig.4_

3/3

0074470

**Europäisches Patentamt**

**EUROPÄISCHER RECHERCHENBERICHT**

EP 82 10 5861

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 06 K 19/00 |
| X,Y | DE-A-1 524 544 (TREBUTH) * Seiten 4-7,10; Ansprüche 1-3 * | 1-10 | G 06 K 17/00 G 06 K 13/02 |
| | --- | | |
| Y | IBM TECHNICAL DISCLOSURE BULLETIN, Band 15, Nr. 11, April 1973, Seiten 3410,3411, Armonk, N.Y., USA D.F. COLGLAZIER et al.: "Stub ticket cartridge" | 3-7,8 | |
| | --- | | |
| Y | US-A-4 176 260 (WARD) * Figuren 1-8; Zusammenfassung; Spalte 1, Zeilen 7-59; Spalte 5, Zeile 12 - Spalte 6, Zeile 14 * | 1,3,5, 7,8 | |
| | --- | | RECHERCHIERTE SACHGEBIETE (Int. Cl. ³) |
| Y | IBM TECHNICAL DISCLOSURE BULLETIN, Band 8, Nr. 5, Oktober 1965, Seiten 725,726, New York, USA J.J. IGEL: "Document selection control circuit" | 8 | G 06 K 13/02 G 06 K 13/06 G 06 K 13/07 |
| | --- | | G 06 K 13/073 |
| Y | US-A-3 002 750 (WHEELER) * Figuren 1-3; Spalte 12, Zeile 40 - Spalte 2, Zeile 63 * | 8-10 | G 06 K 13/10 G 06 K 13/103 G 06 K 13/14 |
| | ----- | | G 06 K 17/00 G 06 K 19/00 G 06 K 19/04 G 06 K 19/06 G 06 K 19/08 |

Der vorliegende Recherchenbericht wurde für alle Patentansprüche erstellt.

| Recherchenort | Abschlußdatum der Recherche | Prüfer |
|---|---|---|
| DEN HAAG | 23-12-1982 | PESCHEL W. |